# EUROPEAN PATENT APPLICATION

(11) **EP 3 567 470 A1**
(43) Date of publication of application: **13.11.2019**
(21) Application number: 18875327.1
(22) Date of filing: 24.10.2018
(51) Int. Cl.: G06F 3/16, G10L 13/00, G10L 15/10, G10L 15/28

(54) **INFORMATION PROCESSING DEVICE AND ELECTRONIC APPARATUS**

(30) Priority: 07.11.2017 JP 2017215067
(71) Applicant: Sony Corporation, Tokyo 108-0075 (JP)
(72) Inventor: WATANABE Hideaki, Tokyo 108-0075 (JP)
(74) Representative: MFG Patentanwälte Meyer-Wildhagen Meggle-Freund Gerhard PartG mbB
(86) International application number: PCT/JP2018/039409
(87) International publication number: WO 2019/093123

(57) **Abstract**

The present technology relates to an information processing apparatus and an electronic device capable of correctly determining to which user a response is to be given.

A speaker identification unit identifies a user existing in a predetermined angular direction as a speaker whose utterance is to be received on the basis of an image and voice in an environment where the user exists. A semantic analysis unit performs semantic analysis of the utterance of the identified speaker and thereby outputs a request of the speaker. The present technology is applicable to a household-use voice assistant device, for example.

## Description

### TECHNICAL FIELD

The present technology relates to an information processing apparatus and an electronic device, and particularly relates to an information processing apparatus and an electronic device capable of judging to which user a response is to be given.

### BACKGROUND ART

In recent years, there have been provided household-use voice assistant devices (home agents) operable by a user's voice.

Some of the home agents can recognize which user out of a plurality of users is requesting operation by utterance on the basis of profile data of each of the users.

Furthermore, Patent Document 1 discloses a configuration that extracts an audio signal component from a specific direction with respect to a microphone array, enabling recognition of voice of the user moving in environment even when another user is speaking. According to this configuration, it is possible to judge to which user a response is to be given without using profile data of individual users.

### CITATION LIST

### PATENT DOCUMENT

Patent Document 1: Japanese Patent Application Laid-Open No. 2006-504130

### SUMMARY OF THE INVENTION

### PROBLEMS TO BE SOLVED BY THE INVENTION

However, the configuration of Patent Document 1 recognizes the user's voice on the basis of the audio signal alone, and therefore, there has been a possibility of failure in voice recognition and failure in judging to which user a response is to be given in an environment or the like having various environmental sounds.

The present technology has been made in view of such a situation and aims to be able to correctly judge to which user a response is to be given.

### SOLUTIONS TO PROBLEMS

An information processing apparatus according to a first aspect of the present technology includes: a speaker identification unit that identifies a user existing in a predetermined angular direction as a speaker whose utterance is to be received on the basis of an image and voice in an environment where the user exists; and a semantic analysis unit that performs semantic analysis of the utterance of the identified speaker and thereby outputs a request of the speaker.

According to the first aspect of the present technology, the user existing in a predetermined angular direction is identified as a speaker whose utterance is to be received on the basis of an image and voice in an environment where the user exists, and semantic analysis of the utterance of the identified speaker is performed, whereby a request of the speaker is output.

An electronic device according to a second aspect of the present technology includes: an imaging unit that obtains an image in an environment where a user exists; a voice acquisition unit that obtains voice in the environment; and a response generation unit that, after identification of the user existing in a predetermined angular direction as a speaker whose utterance is to be received on the basis of the image and the voice, generates a response to a request of the speaker output by execution of semantic analysis on the utterance of the identified speaker.

According to the second aspect of the present technology, an image in the environment where the user exists, voice in the environment is obtained, the user existing in a predetermined angular direction is identified as a speaker whose utterance is to be received on the basis of the image and the voice, and a response to a request of the speaker output by execution of semantic analysis on the utterance of the identified speaker is generated.

### EFFECTS OF THE INVENTION

According to the present technology, it is possible to correctly judge to which user a response is to be given.

Note that effects described herein are non-restricting. The effects may be any of effects described in the present disclosure.

### BRIEF DESCRIPTION OF DRAWINGS

Fig. 1 is a view illustrating an outline of a response system to which the present technology is applied.
Fig. 2 is a block diagram illustrating a hardware configuration example of a home agent.
Fig. 3 is a block diagram illustrating a functional configuration example of a home agent.
Fig. 4 is a diagram illustrating details of a voice session.
Fig. 5 is a flowchart illustrating a flow of face tracking processing.
Fig. 6 is a flowchart illustrating a flow of response generation processing.
Fig. 7 is a view illustrating an example of operation by one user.
Fig. 8 is a diagram illustrating voice session control by operation by a plurality of users.
Fig. 9 is a flowchart illustrating a flow of state management of a voice session and face tracking.
Fig. 10 is a flowchart illustrating a flow of tracking switching processing.
Fig. 11 is a view illustrating an example of face tracking switching.
Fig. 12 is a flowchart illustrating a flow of state management of a voice session and face tracking.
Fig. 13 is a block diagram illustrating a functional configuration example of a response system.
Fig. 14 is a chart illustrating a flow of response generation processing by a response system.
Fig. 15 is a block diagram illustrating a configuration example of a computer.

### MODE FOR CARRYING OUT THE INVENTION

Hereinafter, modes for carrying out the present disclosure (hereinafter, embodiment(s)) will be described. Note that description will be presented in the following order.

1. Outline of response system
2. Configuration and operation of home agent
3. Example of operation by plurality of users
4. Application to cloud computing
5. Others

### <1. Outline of response system>

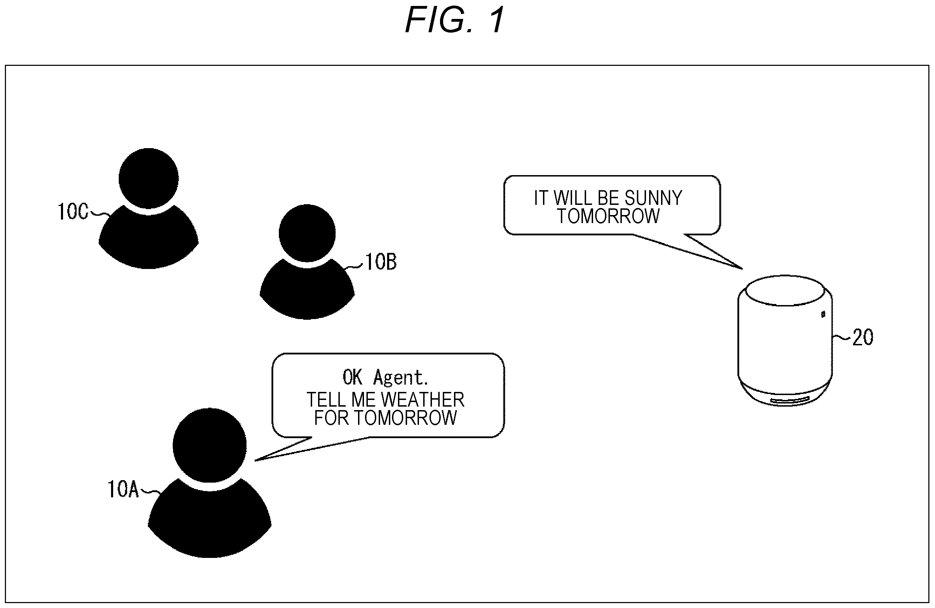

Fig. 1 illustrates an outline of a response system to which the present technology is applied.

Fig. 1 illustrates three users 10A, 10B, and 10C, and a home agent 20 that outputs a response to an utterance of each of the users, provided as an information processing apparatus (electronic device) to which the present technology is applied. The home agent 20 is configured as a household-use voice assistant device.

The home agent 20 obtains images and voice in an environment where the users 10A, 10B, and 10C exist, while performing sensing in the environment. The home agent 20 uses the face and its orientation obtained from the image, an utterance section (utterance duration) and the position of utterance obtained from the voice, and sensing information obtained by the sensing, and identifies which user is requesting operation by utterance. Accordingly, the home agent 20 generates a response to the identified user and outputs the response.

In the example of Fig. 1, the user 10A utters an activation word "OK Agent." and thereafter utters "Tell me the weather for tomorrow", thereby asking the home agent 20 for the weather for tomorrow. The activation word serves as a trigger for the home agent 20 to start a dialogue with the user.

In response to this, the home agent 20 recognizes the utterance of the user 10A and performs semantic analysis, thereby generating and outputting a response "It will be sunny tomorrow".

In the following, details of the home agent 20 that implements the above-described response system will be described.

### <2. Configuration and operation of home agent>

### (Hardware configuration example of home agent)

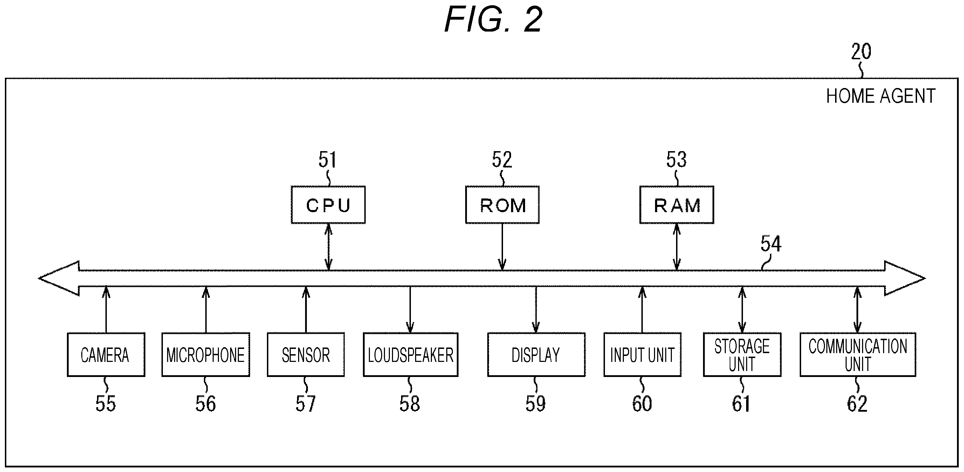

Fig. 2 is a block diagram illustrating a hardware configuration example of the home agent 20 to which the present technology is applied.

A central processing unit (CPU) 51, a read only memory (ROM) 52, and a random access memory (RAM) 53 are connected with each other via a bus 54.

The bus 54 is connected to a camera 55, a microphone 56, a sensor 57, a loudspeaker 58, a display 59, an input unit 60, a storage unit 61, and a communication unit 62.

The camera 55 includes a solid-state imaging element such as a complementary metal oxide semiconductor (CMOS) image sensor and a charge coupled device (CCD) image sensor, and images an environment where a user exists and thereby obtains an image in the environment.

The microphone 56 obtains voice in the environment where the user exists.

The sensor 57 includes various sensors such as a human sensor and a vital sensor. For example, the sensor 57 detects the presence or absence of a person (user) and biometric information such as pulse and respiration of the person.

The loudspeaker 58 outputs voice (synthesized voice).

The display 59 includes a liquid crystal display (LCD), an organic electro luminescence (EL) display, or the like.

The input unit 60 includes a touch panel overlaid on the display 59 and various buttons provided on the housing of the home agent 20. The input unit 60 detects operation by the user and outputs information representing the content of the operation.

The storage unit 61 includes a nonvolatile memory or the like. The storage unit 61 stores various data such as data for voice synthesis in addition to the program executed by the CPU 51.

The communication unit 62 includes a network interface or the like. The communication unit 62 performs wireless or wired communication with an external device.

### (Functional configuration example of home agent)

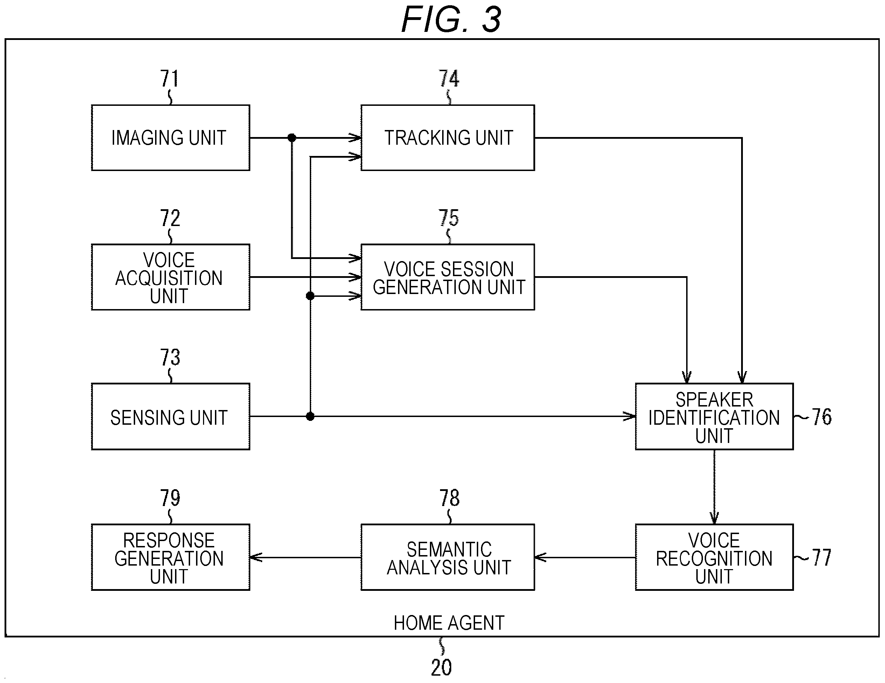

Fig. 3 is a block diagram illustrating a functional configuration example of the home agent 20.

Functional blocks of the home agent 20 illustrated in Fig. 3 are partially implemented by executing a predetermined program by the CPU 51 in Fig. 2.

The home agent 20 includes an imaging unit 71, a voice acquisition unit 72, a sensing unit 73, a tracking unit 74, a voice session generation unit 75, a speaker identification unit 76, a voice recognition unit 77, a semantic analysis unit 78, and a response generation unit 79.

The imaging unit 71 corresponds to the camera 55 in Fig. 2 and images an environment where the user exists and thereby obtains an image of the environment. An image (image data) in the environment where the user exists is obtained in real time and supplied to the tracking unit 74 and the voice session generation unit 75.

The voice acquisition unit 72 corresponds to the microphone 56 in Fig. 2 and obtains voice in the environment where the user exists. Voice (voice data) in the environment where the user exists is also obtained in real time and supplied to the voice session generation unit 75.

The sensing unit 73 corresponds to the sensor 57 in Fig. 2 and performs sensing in an environment where a user exists. Sensing information obtained by sensing is also obtained in real time and supplied to the tracking unit 74, the voice session generation unit 75, and the speaker identification unit 76.

The tracking unit 74 estimates a state of the user (existence or nonexistence of the user or presence or absence of user movement) in an imaging range of the imaging unit 71 on the basis of the image from the imaging unit 71 and the sensing information from the sensing unit 73, and then, performs face identification, face orientation detection, and position estimation. With these various types of processing, identification of user, user's face orientation, and the user's position are estimated.

Furthermore, the tracking unit 74 tracks the user's face detected in the image from the imaging unit 71 on the basis of a result of each of processing described above. The tracking information representing an angular direction of the face being tracked is supplied to the speaker identification unit 76. Note that there is an upper limit on the number of faces that can be tracked simultaneously due to constraints on hardware resources.

The voice session generation unit 75 estimates the direction of the uttering user (angular direction viewed from the home agent 20) and the speech duration on the basis of the voice from the voice acquisition unit 72 and the sensing information from the sensing unit 73.

Furthermore, the voice session generation unit 75 generates a voice session for performing a dialogue with the user, in the angular direction of the uttering user. This configuration enables acquisition of the voice selectively from the angular direction where the voice session is generated. The voice session generation unit 75 associates the obtained voice with the voice session information indicating the angular direction of the generated voice session, and then, supplies the information to the speaker identification unit 76. Note that there is an upper limit also on the number of voice sessions that can be simultaneously generated corresponding to the limitation of the number of faces that can be tracked simultaneously.

The speaker identification unit 76 identifies the user existing in a predetermined angular direction as a speaker whose utterance is to be received on the basis of the image, voice, and sensing information obtained by sensing in the environment where the user exists.

Specifically, the speaker identification unit 76 determines whether or not the user's face is being tracked around the angular direction in which the voice session is generated, on the basis of the tracking information from the tracking unit 74 and the voice session information from the voice session generation unit 75. In a case where the user's face is being tracked around the angular direction in which the voice session is generated, the speaker identification unit 76 identifies the user having the face as the speaker.

Furthermore, the speaker identification unit 76 supplies the voice (voice data) associated with the voice session (voice session information) generated in the angular direction where the speaker exists among the voices from the voice session generation unit 75, to the voice recognition unit 77.

From the above, the tracking unit 74, the voice session generation unit 75, and the speaker identification unit 76 can be defined as a user tracking unit that tracks a user whose utterance is to be received on the basis of the plurality of modalities obtained in the environment where the user exists.

The modalities here include images obtained by the imaging unit 71, voices obtained by the voice acquisition unit 72, and sensing information obtained by the sensing unit 73.

The voice recognition unit 77 checks matching between voice data from the speaker identification unit 76 and vocabulary (words) registered in the large vocabulary voice recognition dictionary that preliminarily registers vocabularies corresponding to a wide range of utterance content, and thereby performs voice recognition. Character strings obtained by the voice recognition is supplied to the semantic analysis unit 78.

The semantic analysis unit 78 performs natural language processing, in particular, semantic analysis, on a sentence including the character strings from the voice recognition unit 77 and thereby extracts a speaker's request. Information indicating the speaker's request is supplied to the response generation unit 79.

The response generation unit 79 generates a response to the speaker's request on the basis of the information from the semantic analysis unit 78. The generated response is output via the loudspeaker 58 in Fig. 2.

### (Details of voice session)

Here, details of a voice session will be described.

As described above, the voice session is generated in the angular direction of the user so as to have a dialog with the uttering user, and indicates that the home agent 20 is in a state that can be operated by the user.

With user's intension of performing certain operation as a trigger, the home agent 20 recognizes the intention and thereby generates a voice session.

Accordingly, the home agent 20 performs speech analysis selectively on an utterance from the angular direction where the voice session is generated, and then, generates a response.

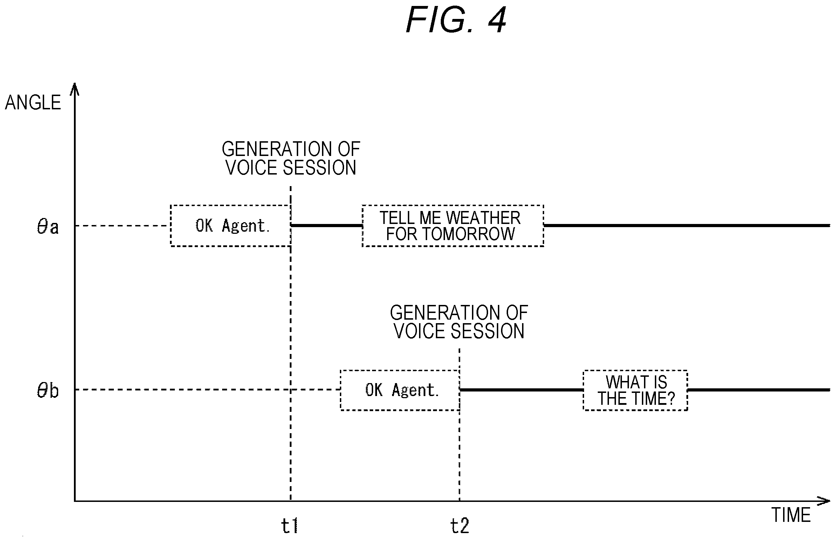

For example, as illustrated in Fig. 4, when a user Ua in an angular direction θa as viewed from the home agent 20 utters an activation word "OK Agent." as a trigger, a voice session is generated at time t1 in the angular direction θa.

Thereafter, when the user Ua utters "Tell me the weather for tomorrow", the home agent 20 performs speech analysis on the voice from the angular direction θa, and generates a response to the utterance "Tell me the weather for tomorrow".

Furthermore, when a user Ub in an angular direction θb as viewed from the home agent 20 utters an activation word "OK Agent." as a trigger, a voice session is generated in the angular direction θb at time t2.

Thereafter, when the user Ub utters "What is the time?", the home agent 20 performs speech analysis on the voice from an angular direction θb, and generates a response to the utterance "What is the time?".

Note that as described above, the number of voice sessions that can be generated simultaneously has an upper limit, and the maximum number is N. In a case where a new voice session is to be generated with N voice sessions already being generated, the home agent 20 terminates one of the existing voice sessions and generates a new voice session.

### (Operation example of home agent)

In an environment where the user exists, the home agent 20 generates a voice session with the activation word as a trigger while tracking the face at a fixed time interval and thereby identifies a speaker.

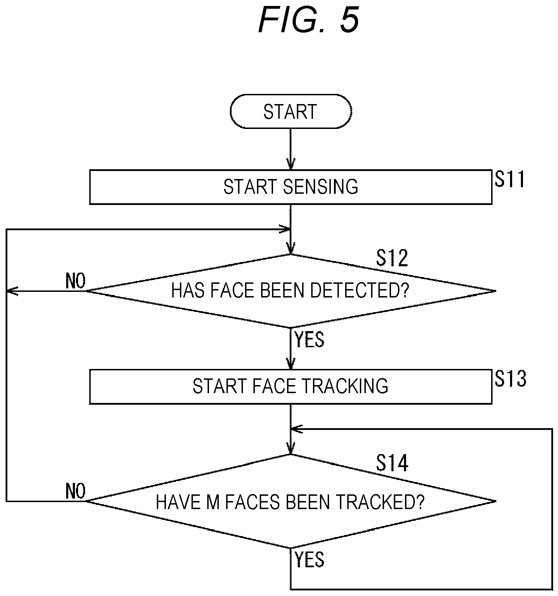

Accordingly, a flow of face tracking processing performed by the home agent 20 will be described with reference to the flowchart of Fig. 5 first.

In step S11, the home agent 20 starts sensing by the sensing unit 73. At this time, the home agent 20 also starts acquisition of an image by the imaging unit 71. Thereafter, the sensing by the sensing unit 73 and the image acquisition by the imaging unit 71 are to be performed continuously.

In step S12, the tracking unit 74 determines whether or not a face has been detected in the image obtained by the imaging unit 71. Processing repeats step S12 while the face is not detected. When a face is detected, the processing proceeds to step S13.

In step S13, the tracking unit 74 starts tracking of the detected face. After the face has been successful tracked, the tracking unit 74 supplies the tracking information regarding the face to the speaker identification unit 76.

In step S14, the tracking unit 74 determines whether or not tracking has been performed on M faces that are the upper limit of the number of faces that can be tracked simultaneously.

In a case where M faces have not been tracked and the number of faces that have been tracked has not reached the upper limit, the processing repeats steps S12 to S14 until M faces are tracked.

In contrast, when M faces have been tracked, the processing repeats step S14. In this period, in a case where tracking fails due to some reason and the number of faces tracked is reduced below M, the processing returns to step S12 and steps S12 to S14 are repeated until M faces have been tracked again.

As described above, face tracking is continuously performed.

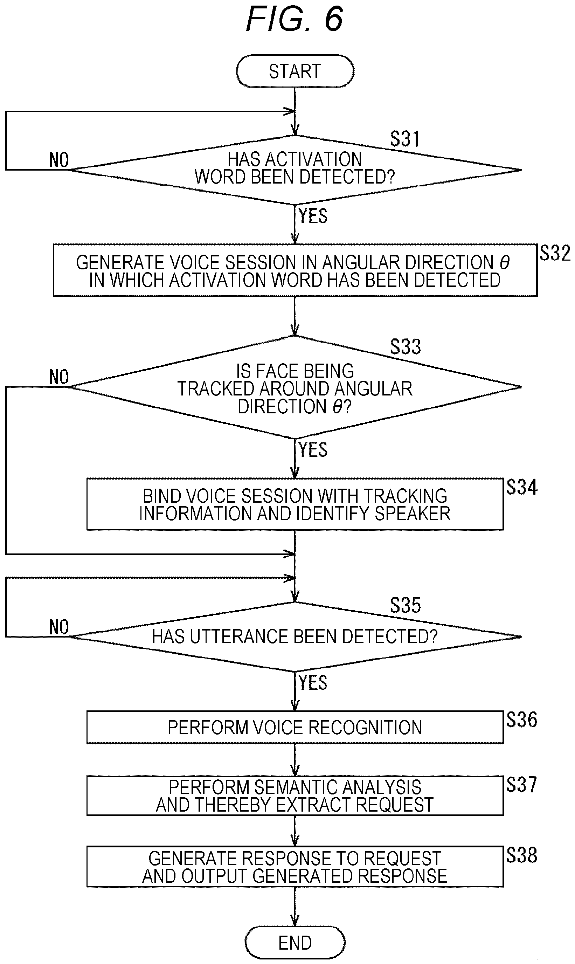

Next, a flow of response generation processing will be described with reference to the flowchart of Fig. 6. The processing in Fig. 6 is executed in a state where the face tracking processing described with reference to the flowchart in Fig. 5 is in execution.

In step S31, the voice session generation unit 75 determines whether or not an activation word has been detected on the basis of the voice from the voice acquisition unit 72. The processing of step S31 is repeated during the time the activation word has not been detected. When an activation word is detected, the processing proceeds to step S32.

In step S32, the voice session generation unit 75 generates a voice session in an angular direction θ in which the activation word has been detected. At this time, the voice session generation unit 75 supplies the voice session information regarding the generated voice session to the speaker identification unit 76.

In step S33, the speaker identification unit 76 determines whether or not a face is being tracked around the angular direction θ in which the activation word has been detected, on the basis of the tracking information from the tracking unit 74 and the voice session information from the voice session generation unit 75.

In a case where it is determined that the face is being tracked around the angular direction θ, the processing proceeds to step S34.

In step S34, the speaker identification unit 76 binds the voice session information and the tracking information, and identifies the user having the face that is being tracked around the angular direction θ as the speaker. With this processing, speech analysis is performed on voice from the angular direction θ.

That is, in step S35, the voice session generation unit 75 determines whether or not an utterance from the angular direction θ has been detected on the basis of the voice from the voice acquisition unit 72. The processing of step S35 is repeated during the time the utterance has not been detected. In contrast, when the utterance is detected, the speaker identification unit 76 supplies the detected voice (voice data) to the voice recognition unit 77, and the processing proceeds to step S36.

In step S36, the voice recognition unit 77 checks matching between the voice data from the speaker identification unit 76 and the vocabulary registered in the large vocabulary voice recognition dictionary, and thereby performs voice recognition.

In step S37, the semantic analysis unit 78 performs semantic analysis on a sentence including a character string obtained by voice recognition performed by the voice recognition unit 77, and thereby extracts a request of the speaker.

In step S38, the response generation unit 79 generates a response to the request of the speaker extracted by the semantic analysis unit 78, and outputs the response via the loudspeaker 58.

Note that in a case where it is determined in step S33 that no face is being tracked around the angular direction θ, step S34 is skipped and the processing proceeds to step S35. Here, even in a case where an utterance from the angular direction θ has been detected, the home agent 20 outputs a response corresponding to the utterance content.

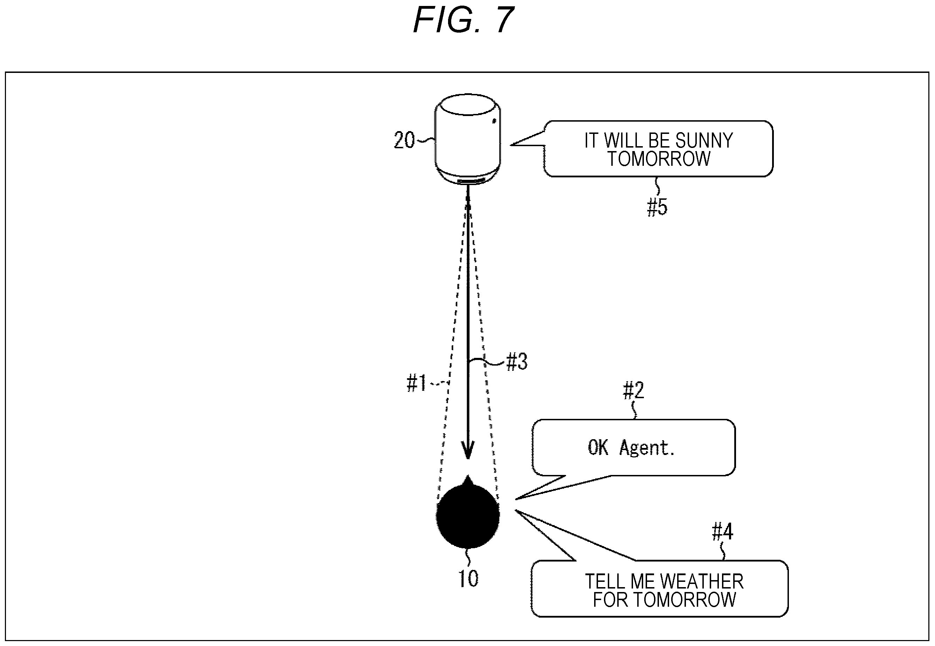

Fig. 7 illustrates an example of operation of the home agent 20 by one user, based on the above-described face tracking processing and response generation processing.

Fig. 7 illustrates one user 10 and the home agent 20.

First, as illustrated in #1, the home agent 20 starts tracking of the face of the user 10 (step S13 in Fig. 5).

In this state, as illustrated in #2, when the user 10 utters the activation word, "OK Agent.", the home agent 20 detects the activation word (step S31 in Fig. 6).

When the activation word has been detected, as illustrated in #3, the home agent 20 generates a voice session in the angular direction where the activation word has been detected (step S32 in Fig. 6). According to this, the home agent 20 identifies the user 10 as a speaker (step S34 in Fig. 6).

Thereafter, when the user 10 utters "Tell me the weather for tomorrow" as illustrated in #4, the home agent 20 detects the utterance and performs voice recognition and semantic analysis, and thereby extracts the request of the user 10 (steps S35 to S37 in Fig. 6) .

Next, as illustrated in #5, the home agent 20 generates and outputs a response "It will be sunny tomorrow" in response to the request of the user 10 (step S38 in Fig. 6).

According to the above processing, a voice session is generated for each of users whose face are being tracked, enabling identification of the speaker in an environment including a plurality of users. That is, the user whose utterance is to be received is tracked on the basis of the plurality of modalities without being influenced by various environmental sounds. Therefore, the home agent 20 can correctly judge to which user a response is to be given.

### (Example of trigger)

The above is an exemplary case of utterance of a predetermined word (activation word) such as "OK Agent." as the intention (trigger) to perform certain operation on the home agent 20. The trigger is not to be limited to this example and may be based on at least any of an image from the imaging unit 71, voice from the voice acquisition unit 72, and sensing information from the sensing unit 73.

For example, a predetermined gesture (action) such as "waving a hand" toward the home agent 20 may be used as a trigger. The gesture is to be detected in the image obtained by the imaging unit 71.

Alternatively, face orientation detection or line-of-sight detection based on the sensing information from the sensing unit 73 may be performed by using a state in which the user is continuously watching the home agent 20 for a certain period of time, as a trigger.

Moreover, it is allowable to perform human detection based on the sensing information from the sensing unit 73 having a human sensor function, and a state in which the user approaches within a certain distance range from the home agent 20 may be used as a trigger.

### <3. Example of operation by plurality of users>

The home agent 20 can receive operation by a plurality of users.

### (Control of voice session)

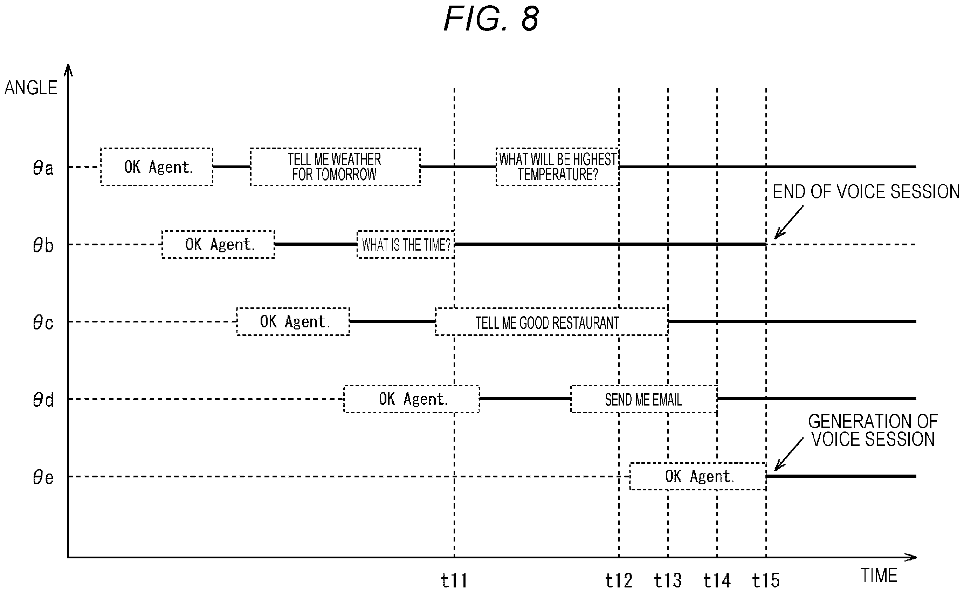

Fig. 8 is a diagram illustrating voice session control by operation by a plurality of users.

As illustrated in Fig. 8, the activation word, "OK Agent." is uttered by four users, namely, the user Ua present in the angular direction the user Ub in the angular direction θb, a user Uc in an angular direction θc, and a user Ud in an angular direction θd, viewed from the home agent 20. This leads to generation of voice sessions in four directions of angular directions θb, θc, and θd.

In the example of Fig. 8, the user Ua utters "Tell me the weather for tomorrow" after uttering an activation word, and thereafter utters "what is highest temperature?". The time of the utterance is t12.

The user Ub utters "What is the time?" after uttering the activation word. The time of utterance is t11.

The user Uc utters "Tell me a good restaurant" after uttering the activation word. The time of utterance is t13.

The user Ud uttered the activation word and then, uttered "Send me an e-mail". The time of utterance is t14.

Here, it is assumed that the upper limit of the number of voice sessions that can be simultaneously generated is four.

In this state, in a case where the activation word "OK Agent." is uttered by the user Ue in the angular direction θe as viewed from the home agent 20 at time t15, the home agent 20 terminates the voice session having earliest utterance detection time, out of the voice sessions in four directions.

Specifically, the home agent 20 terminates, at time t15, the voice session in the angular direction θb in which the utterance is detected at time t11, and newly generates a voice session in the angular direction θe.

The generation and termination of the voice session is controlled in this manner. Note that similar control is performed in a case where the user moves, as well.

While the example of Fig. 8 terminates the voice session having the earliest utterance detection time, it is sufficient as long as the voice session having the lowest probability of occurrence of utterance toward the home agent 20 can be terminated. Accordingly, it is also possible to terminate the voice session on the basis of other conditions.

For example, it is allowable to terminate a voice session of a moving user by personal detection based on the sensing information from the sensing unit 73 having the function of a human sensor or by motion detection in an image obtained by the imaging unit 71.

Alternatively, the face orientation detection or the line-of-sight detection based on sensing information from the sensing unit 73, or the face detection in the image obtained by the imaging unit 71 may be used to terminate the voice session of a user whose face is not in the direction of the home agent 20.

Furthermore, the voice session of the user who has fallen asleep may be terminated on the basis of the sensing information from the sensing unit 73 having the function of a vital sensor.

Still alternatively, the voice session of the user operating a mobile terminal such as user's smartphone may be terminated. Whether or not the user is operating the mobile terminal can be determined on the basis of the image obtained by the imaging unit 71, detection of an activation state or an operation state of the application running on the mobile terminal, or the like.

As described above, voice session is controlled by the operation by the plurality of users.

### (State management of voice session and face tracking)

As described above, the home agent 20 generates a voice session for each of users whose face have been tracked. Furthermore, the home agent 20 manages both the voice session and the face tracking state, thereby enabling switching face tracking in conjunction with the control of the voice session described with reference to Fig. 8.

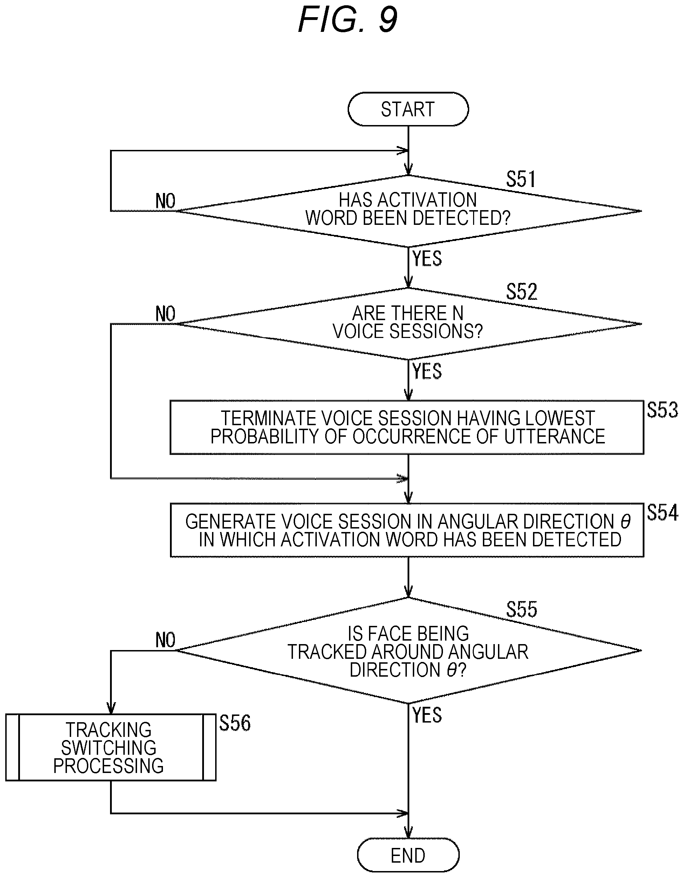

Here, a flow of state management of the voice session and the face tracking will be described with reference to the flowchart of Fig. 9.

In step S51, the voice session generation unit 75 determines whether or not an activation word has been detected on the basis of voice from the voice acquisition unit 72. Processing repeats step S51 while the activation word is not detected. When an activation word is detected, the processing proceeds to step S52.

In step S52, it is determined whether or not there are N voice sessions, which is the upper limit of the number that can be generated as the currently generated voice session. Note that while the upper limit N of the number of voice sessions that can be simultaneously generated here is the same as an upper limit M of the number of faces that can be simultaneously tracked, it may be a different number.

In a case where there are N voice sessions, the processing proceeds to step S53. The voice session generation unit 75 terminates the voice session estimated to have the lowest probability of occurrence of utterance.

At this time, the voice session generation unit 75 estimates the voice session having lowest probability of occurrence of utterance on the basis of at least any of the image from the imaging unit 71, the voice from the voice acquisition unit 72, and the sensing information from the sensing unit 73. For example, similarly to the example in Fig. 8, the voice session generation unit 75 estimates the voice session having earliest utterance detection time as the voice session having the lowest probability of occurrence of utterance on the basis of the voice from the voice acquisition unit 72, and terminates the voice session.

In contrast, in a case where there have not been N voice sessions and the number of voice sessions has not yet reached the upper limit, step S53 is skipped.

In step S54, the voice session generation unit 75 generates a voice session in the angular direction θ in which the activation word has been detected.

In step S55, the tracking unit 74 determines whether or not a face is being tracked around the angular direction θ.

In a case where it is determined that the face is being tracked around the angular direction θ, the processing of the state management of the voice session and the face tracking is terminated, and processing similar to that of step S34 and thereafter in the flowchart of Fig. 6 is executed.

In contrast, in a case where it is determined that the face is not being tracked around the angular direction θ, the processing proceeds to step S56.

In step S56, the tracking unit 74 executes tracking switching processing of switching the face to be tracked, and thereafter, processing similar to that of step S34 and thereafter in the flowchart of Fig. 6 is executed.

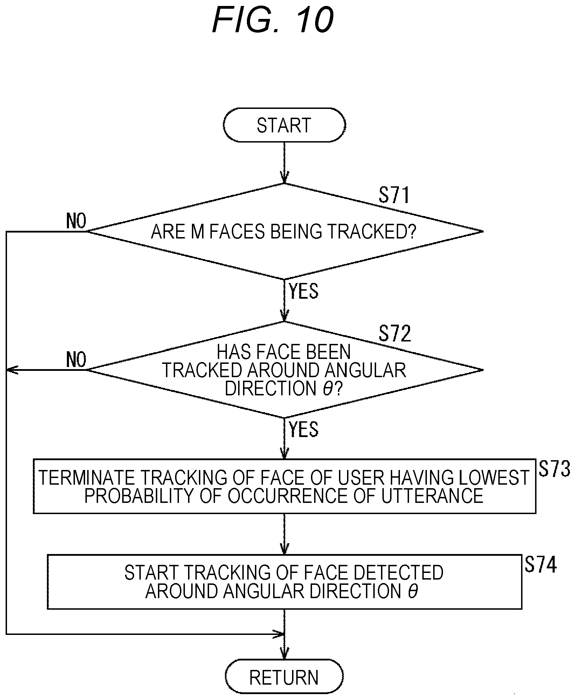

Here, details of the tracking switching processing will be described with reference to the flowchart of Fig. 10.

In step S71, the tracking unit 74 determines whether or not tracking has been performed on M faces, which are the upper limit of the number of faces that can be tracked simultaneously.

In a case where M faces are being tracked, the processing proceeds to step S72, and the tracking unit 74 determines whether or not a face has been detected around the angular direction θ in the image obtained by the imaging unit 71.

In a case where a face has been detected around the angular direction θ, the processing proceeds to step S73, and the tracking unit 74 terminates the tracking of the face of the user estimated to have the lowest probability of utterance.

At this time, the tracking unit 74 estimates a user having the lowest probability of uttering on the basis of at least any of the image from the imaging unit 71 and the sensing information from the sensing unit 73. For example, on the basis of the image from the imaging unit 71, the tracking unit 74 estimates the user existing at a most distant position from the home agent 20 as the user with the lowest probability of uttering, and terminates the tracking of the face of the user.

Thereafter, in step S74, the tracking unit 74 starts tracking of the face detected around the angular direction θ. At this time, in a case where there is a plurality of faces detected around the angular direction θ, tracking of the face detected in an angular direction closest to the angular direction θ is to be started.

Meanwhile, in a case where it is determined in step S71 that M faces are not being tracked, or in a case where it is determined in step S72 that a face has not been detected around the angular direction θ, the processing is terminated without starting new tracking.

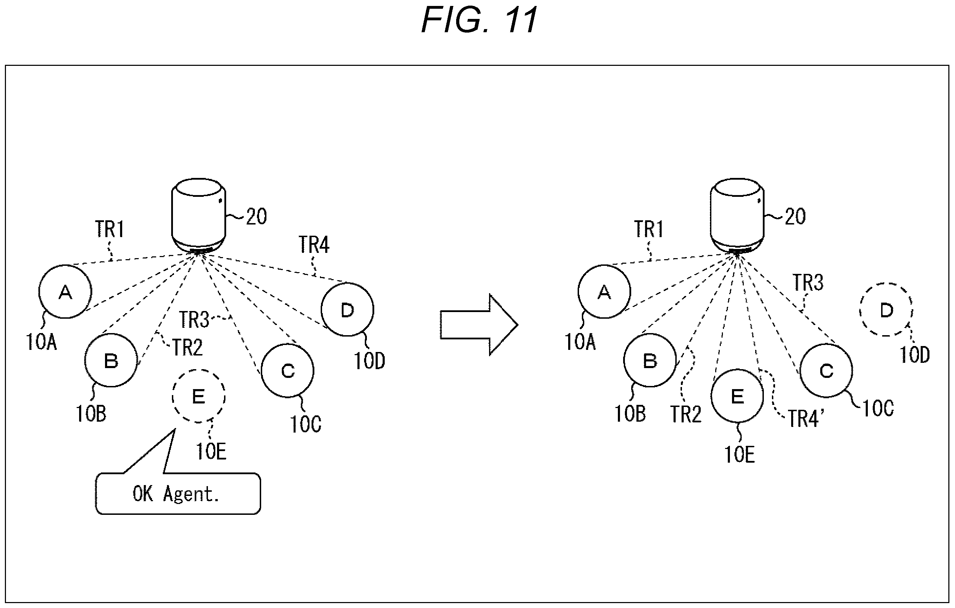

Fig. 11 illustrates an example of switching of face tracking in conjunction with the detection of an activation word, based on the above-described processing.

Fig. 11 illustrates five users 10A, 10B, 10C, 10D, and 10E and the home agent 20.

In a state in a left illustration of Fig. 11, faces of four users 10A, 10B, 10C, and 10D out of the five users are being tracked by the home agent 20. In the figure, broken lines TR1 to TR4 indicate that the face is being tracked.

In the example of Fig. 11, it is assumed that the upper limit of the number of faces that can be simultaneously tracked is four. Therefore, in the state in the left illustration of Fig. 11, the face of the user 10E is not being tracked.

In this state, when the user 10E utters the activation word "OK Agent.", the home agent 20 generates a voice session in the angular direction in which the activation word has been detected.

Thereafter, as in a right illustration of Fig. 11, the home agent 20 terminates the tracking of the face of the user 10D existing at a most distant position, and at the same time, starts tracking (TR4') of the face of the user 10E detected in the angular direction where the activation word has been detected.

In this manner, it is possible to switch the faces to be tracked in conjunction with the detection of the activation word.

While the above is an example of tracking switching in conjunction with detection of an activation word, it is also possible to switch the faces to be tracked in conjunction with utterance detection.

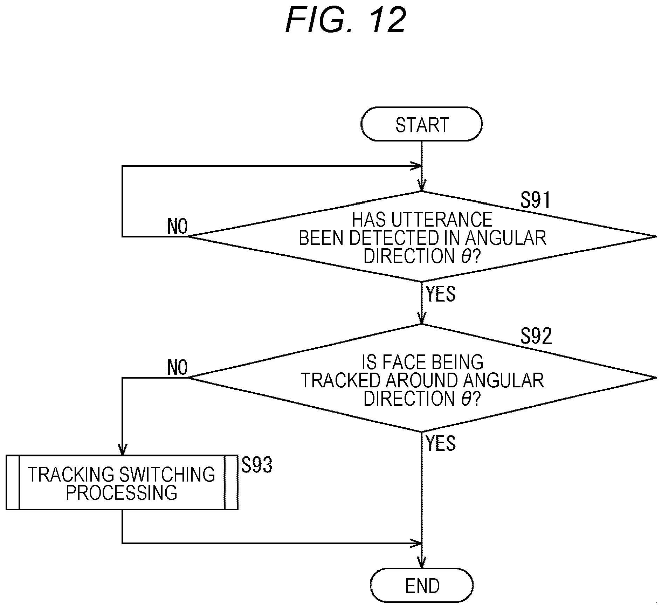

Fig. 12 is a flowchart illustrating a flow of the state management of the voice session and the face tracking in which the tracking of the face is switched in conjunction with utterance detection.

In step S91, the voice session generation unit 75 determines whether or not an utterance has been detected in the angular direction θ on the basis of the voice from the voice acquisition unit 72. The processing repeats step S91 while no utterance is detected. When an utterance is detected, the processing proceeds to step S92.

In step S92, the tracking unit 74 determines whether or not a face is being tracked around the angular direction θ.

In a case where it is determined that the face is being tracked around the angular direction θ, the processing of the state management of the voice session and the face tracking is terminated, and processing similar to that of step S34 and thereafter in the flowchart of Fig. 6 is executed.

In contrast, in a case where it is determined that the face is not being tracked around the angular direction θ, the processing proceeds to step S93. The tracking unit 74 executes the tracking switching processing described with reference to the flowchart of Fig. 10.

For example, in a case where a user in the angular direction θ temporarily moves in a state where a voice session is generated in the angular direction θ, the tracking of the face of the user might be terminated in some cases. Even in such a case, according to the above-described processing, it is possible to newly start the tracking of the face of the user.

### <4. Application to cloud computing>

The present technology can also be applied to cloud computing.

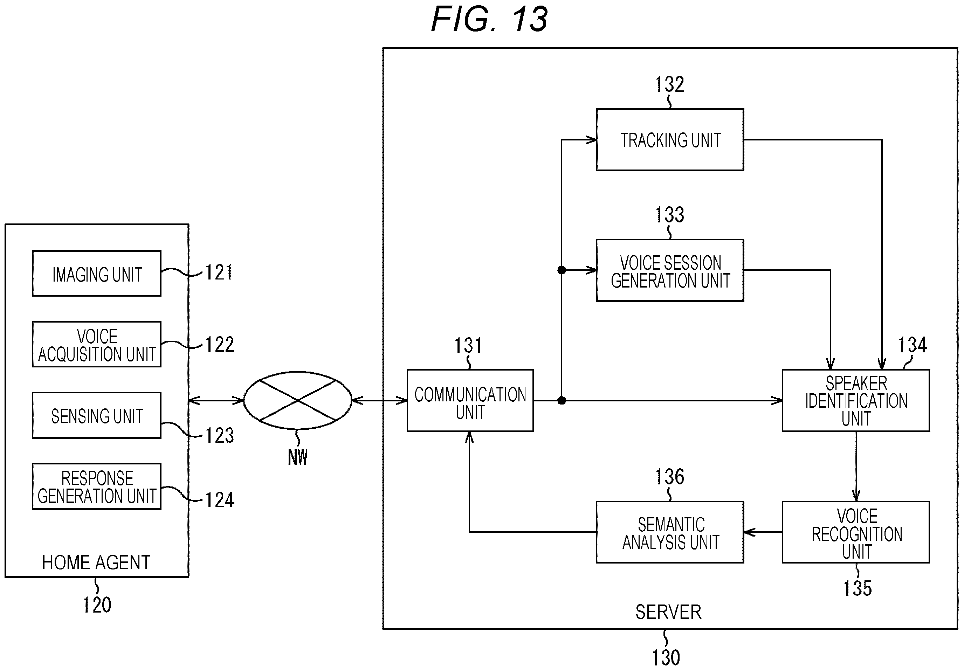

Fig. 13 is a block diagram illustrating a functional configuration example of a response system applied to cloud computing.

As illustrated in Fig. 13, a home agent 120 includes an imaging unit 121, a voice acquisition unit 122, a sensing unit 123, and a response generation unit 124.

The home agent 120 transmits the image obtained by the imaging unit 121, the voice obtained by the voice acquisition unit 122, and the sensing information obtained by the sensing unit 123, to a server 130 connected via a network NW.

Furthermore, the home agent 120 outputs the response generated by the response generation unit 124 on the basis of a result of semantic analysis transmitted from the server 130 via the network NW.

The server 130 includes a communication unit 131, a tracking unit 132, a voice session generation unit 133, a speaker identification unit 134, a voice recognition unit 135, and a semantic analysis unit 136.

The communication unit 131 receives images, voice, and sensing information transmitted from the home agent 120 via the network NW. Furthermore, the communication unit 131 transmits a result of the semantic analysis obtained by the semantic analysis unit 136 to the home agent 120 via the network NW.

Each of the tracking unit 132 to the semantic analysis unit 136 has a function same as the function of each of the tracking unit 74 to the semantic analysis unit 78 in Fig. 3, respectively.

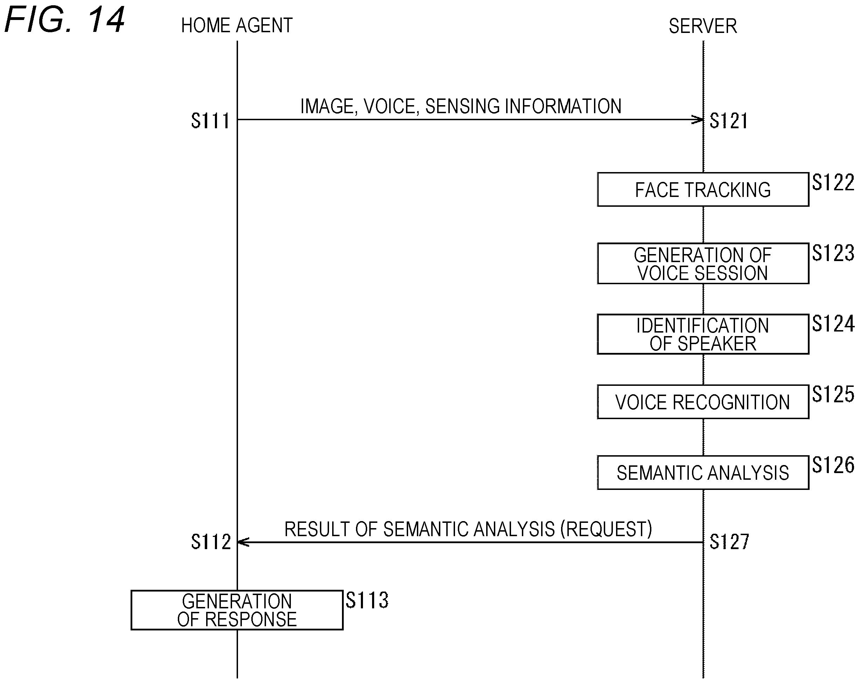

Next, a flow of response generation processing performed by the response system of Fig. 13 will be described with reference to Fig. 14.

In step S111, the home agent 120 sequentially transmits images, voice, and sensing information respectively obtained by the imaging unit 121, the voice acquisition unit 122, and the sensing unit 123, to the server 130.

After receiving the image, voice and sensing information in step S121, the server 130 starts, in step S122, face tracking on the basis of the image from the home agent 120 and the sensing information.

After receiving the activation word as the voice from the home agent 120, the server 130 generates a voice session in step S123 and identifies the speaker in step S124.

After receiving the utterance (request from the speaker) as the voice from the home agent 120, the server 130 performs voice recognition in step S125. Furthermore, in step S126, the server 130 performs semantic analysis on a sentence including a character string obtained by voice recognition, and thereby extracts the request of the speaker.

Subsequently, in step S127, the server 130 transmits, to the home agent 120, information indicating the speaker's request, which is the result of the semantic analysis.

The home agent 120 receives the information indicating the speaker's request from the server 130 in step S112, and then generates a response to the speaker's request in step S113, and outputs the generated request via a loudspeaker (not illustrated).

In the above processing, the user whose utterance is to be received is tracked without being influenced by various environmental sounds. Accordingly, the server 130 can correctly determine to which user a response is to be given.

### <5. Others>

A series of processing described above can be executed in hardware or with software. In a case where the series of processing is executed by software, a program constituting the software is installed onto a computer incorporated in dedicated hardware, a general-purpose computer, or the like, from a program recording medium.

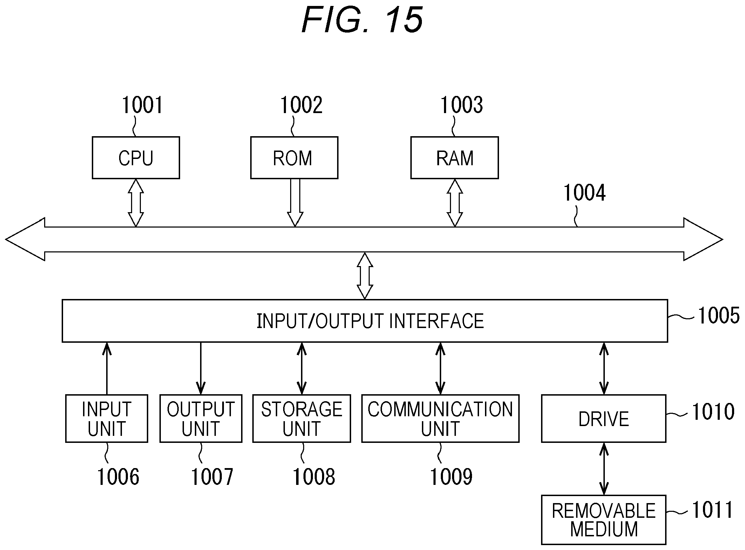

Fig. 15 is a block diagram illustrating an exemplary configuration of hardware of a computer that executes the series of processing described above by a program.

The home agent 20 and the server 130 described above are implemented by a computer having the configuration illustrated in Fig. 15.

A CPU 1001, a ROM 1002, and a RAM 1003 are mutually connected by a bus 1004.

The bus 1004 is further connected with an input/output interface 1005. The input/output interface 1005 is connected with an input unit 1006 including a keyboard, a mouse, and the like, and with an output unit 1007 including a display, a loudspeaker, and the like. Moreover, the input/output interface 1005 is connected with a storage unit 1008 including a hard disk, a nonvolatile memory, and the like, a communication unit 1009 including a network interface and the like, and a drive 1010 for driving a removable medium 1011.

On the computer configured as above, the series of above-described processing is executed by operation such that the CPU 1001 loads, for example, a program stored in the storage unit 1008 onto the RAM 1003 via the input/output interface 1005 and the bus 1004 and executes the program.

The program executed by the CPU 1001 is provided in a state of being recorded in the removable medium 1011 or provided via a wired or wireless transmission medium such as a local area network, the Internet, or a digital broadcast, for example, and installed in the storage unit 1008.

Note that the program executed by the computer may be a program processed in a time series in an order described in the present description, or as well as may be a program processed in required timing such as being called.

Note that embodiments of the present technology are not limited to the above-described embodiments but can be modified in a variety of ways without departing from a scope of the present technology.

In addition, effects described herein are provided for purposes of exemplary illustration and are not intended to be limiting. Still other effects may also be contemplated.

In addition, the present technology can be configured as follows.
(1) An information processing apparatus including:
   a speaker identification unit that identifies a user existing in a predetermined angular direction as a speaker whose utterance is to be received on the basis of an image and voice in an environment where the user exists; and
   a semantic analysis unit that performs semantic analysis of the utterance of the identified speaker to output a request of the speaker.
(2) The information processing apparatus according to (1),
   in which, in a case where a face of the user detected in the image is being tracked in the angular direction in which a voice session for performing a dialogue with the user is generated, the speaker identification unit identifies the user as the speaker.
(3) The information processing apparatus according to (2), further including:
   a tracking unit that tracks the face of the user detected in the image; and
   a voice session generation unit that generates the voice session in the angular direction in which a trigger for starting the dialogue with the user has been detected.
(4) The information processing apparatus according to (3),
   in which the speaker identification unit identifies the speaker on the basis of the image, the voice, and sensing information obtained by sensing in the environment.
(5) The information processing apparatus according to (4),
   in which the trigger is detected on the basis of at least any of the image, the voice, and the sensing information.
(6) The information processing apparatus according to (5),
   in which the trigger is an utterance of a predetermined word detected from the voice.
(7) The information processing apparatus according to (5),
   in which the trigger is predetermined operation detected from the image.
(8) The information processing apparatus according to any of (3) to (7),
   in which, in a case where the trigger has been detected in the angular direction different from the angular direction in which N voice sessions are being generated in a state where the N voice sessions are being generated, the voice session generation unit terminates the voice session estimated to have a lowest probability of occurrence of the utterance out of the N voice sessions.
(9) The information processing apparatus according to (8),
   in which the voice session generation unit estimates the voice session having the lowest probability of occurrence of the utterance on the basis of at least any of the image, the voice, and the sensing information.
(10) The information processing apparatus according to (9),
   in which the voice session generation unit terminates the voice session having the earliest utterance detection time, on the basis of the voice.
(11) The information processing apparatus according to any of (8) to (10),
   in which, in a case where the face has been detected in the angular direction different from the angular direction in which M faces are being tracked in a state where the M faces are being tracked, the tracking unit terminates the tracking of the face of the user estimated to have the lowest probability of occurrence of the utterance out of the M faces being tracked.
(12) The information processing apparatus according to (11),
   in which the tracking unit estimates the user having the lowest probability of occurrence of the utterance on the basis of at least any of the image, and the sensing information.
(13) The information processing apparatus according to (12),
   in which the tracking unit terminates tracking of the face of the user existing at a most distant position on the basis of the image.
(14) The information processing apparatus according to any of (11) to (13),
   in which the number M of the faces tracked by the tracking unit and the number N of the voice sessions generated by the voice session generation unit are the same.
(15) The information processing apparatus according to any of (1) to (14), further including a voice recognition unit that performs voice recognition of the utterance of the identified speaker,
   in which the semantic analysis unit uses a result of the voice recognition on the utterance and performs the semantic analysis.
(16) The information processing apparatus according to any of (1) to (15), further including a response generation unit that generates a response to the request of the speaker.
(17) The information processing apparatus according to any of (1) to (16), further including:
   an imaging unit that obtains the image in the environment; and
   a voice acquisition unit that obtains the voice in the environment.
(18) An information processing method including:
   identifying a user existing in a predetermined angular direction as a speaker whose utterance is to be received on the basis of an image and voice in an environment where the user exists; and
   performing semantic analysis of the utterance of the identified speaker to output a request of the speaker,
   executed by an information processing apparatus.
(19) A program causing a computer to execute processing including:
   identifying a user existing in a predetermined angular direction as a speaker whose utterance is to be received on the basis of an image and voice in an environment where the user exists; and
   performing semantic analysis of the utterance of the identified speaker to output a request of the speaker.
(20) An electronic device including:
   an imaging unit that obtains an image in an environment where a user exists;
   a voice acquisition unit that obtains voice in the environment; and
   a response generation unit that, after identification of the user existing in a predetermined angular direction as a speaker whose utterance is to be received on the basis of the image and the voice, generates a response to a request of the speaker output by execution of semantic analysis on the utterance of the identified speaker.
(21) An information processing apparatus including:
   a user tracking unit that tracks a user whose utterance is to be received on the basis of a plurality of modalities obtained in an environment where the user exists; and
   a semantic analysis unit that performs semantic analysis of the utterance of the user being tracked to output a request of the user.
(22) The information processing apparatus according to (21),
   in which the plurality of modalities includes at least an image and voice in the environment.

### REFERENCE SIGNS LIST

- 20: Home agent
- 71: Imaging unit
- 72: Voice acquisition unit
- 73: Sensing unit
- 74: Tracking unit
- 75: Voice session generation unit
- 76: Speaker identification unit
- 77: Voice recognition unit
- 78: Semantic analysis unit
- 79: Response generation unit
- 120: Home agent
- 121: Imaging unit
- 122: Voice acquisition unit
- 123: Sensing unit
- 124: Response generation unit
- 130: Server
- 131: Communication unit
- 132: Tracking unit
- 133: Voice session generation unit
- 134: Speaker identification unit
- 135: Voice recognition unit
- 136: Semantic analysis unit

## Claims

1. An information processing apparatus comprising:
a speaker identification unit that identifies a user existing in a predetermined angular direction as a speaker whose utterance is to be received on a basis of an image and voice in an environment where the user exists; and
a semantic analysis unit that performs semantic analysis of the utterance of the identified speaker to output a request of the speaker.

2. The information processing apparatus according to claim 1,
wherein, in a case where a face of the user detected in the image is being tracked in the angular direction in which a voice session for performing a dialogue with the user is generated, the speaker identification unit identifies the user as the speaker.

3. The information processing apparatus according to claim 2, further comprising:
a tracking unit that tracks the face of the user detected in the image; and
a voice session generation unit that generates the voice session in the angular direction in which a trigger for starting the dialogue with the user has been detected.

4. The information processing apparatus according to claim 3,
wherein the speaker identification unit identifies the speaker on a basis of the image, the voice, and sensing information obtained by sensing in the environment.

5. The information processing apparatus according to claim 4,
wherein the trigger is detected on a basis of at least any of the image, the voice, and the sensing information.

6. The information processing apparatus according to claim 5,
wherein the trigger is an utterance of a predetermined word detected from the voice.

7. The information processing apparatus according to claim 5,
wherein the trigger is predetermined operation detected from the image.

8. The information processing apparatus according to claim 3,
wherein, in a case where the trigger has been detected in the angular direction different from the angular direction in which N voice sessions are being generated in a state where the N voice sessions are being generated, the voice session generation unit terminates the voice session estimated to have a lowest probability of occurrence of the utterance out of the N voice sessions.

9. The information processing apparatus according to claim 8,
wherein the voice session generation unit estimates the voice session having the lowest probability of occurrence of the utterance on a basis of at least any of the image, the voice, and the sensing information.

10. The information processing apparatus according to claim 9,
wherein the voice session generation unit terminates the voice session having an earliest utterance detection time, on a basis of the voice.

11. The information processing apparatus according to claim 8,
wherein, in a case where the face has been detected in the angular direction different from the angular direction in which M faces are being tracked in a state where the M faces are being tracked, the tracking unit terminates the tracking of the face of the user estimated to have the lowest probability of occurrence of the utterance out of the M faces being tracked.

12. The information processing apparatus according to claim 11,
wherein the tracking unit estimates the user having the lowest probability of occurrence of the utterance on a basis of at least any of the image, and the sensing information.

13. The information processing apparatus according to claim 12,
wherein the tracking unit terminates tracking of the face of the user existing at a most distant position on a basis of the image.

14. The information processing apparatus according to claim 11,
wherein a number M of the faces tracked by the tracking unit and a number N of the voice sessions generated by the voice session generation unit are same.

15. The information processing apparatus according to claim 1, further comprising a voice recognition unit that performs voice recognition of the utterance of the identified speaker,
wherein the semantic analysis unit uses a result of the voice recognition on the utterance and performs the semantic analysis.

16. The information processing apparatus according to claim 1, further comprising a response generation unit that generates a response to the request of the speaker.

17. The information processing apparatus according to claim 1, further comprising:
an imaging unit that obtains the image in the environment; and
a voice acquisition unit that obtains the voice in the environment.

18. An electronic device comprising:
an imaging unit that obtains an image in an environment where a user exists;
a voice acquisition unit that obtains voice in the environment; and
a response generation unit that, after identification of the user existing in a predetermined angular direction as a speaker whose utterance is to be received on a basis of the image and the voice, generates a response to a request of the speaker output by execution of semantic analysis on the utterance of the identified speaker.

19. An information processing apparatus comprising:
a user tracking unit that tracks a user whose utterance is to be received on a basis of a plurality of modalities obtained in an environment where the user exists; and
a semantic analysis unit that performs semantic analysis of the utterance by the user being tracked to output a request of the user.

20. The information processing apparatus according to claim 19,
wherein the plurality of modalities includes at least an image and voice in the environment.
